# EUROPEAN PATENT APPLICATION

(11) **EP 1 455 191 A1**
(43) Date of publication of application: **08.09.2004**
(21) Application number: 02781785.7
(22) Date of filing: 15.11.2002
(51) Int. Cl.: G01N 35/10, G01N 1/00, B01J 4/02, B01L 3/02

(54) **PARTIALLY FILLING DEVICE MOVABLE TO ORTHOGONAL COORDINATE AND CYLINDRICAL COORDINATE**

(30) Priority: 15.11.2001 JP 2001350529
(71) Applicant: Toyo Boseki Kabushiki Kaisha, Osaka-shi, Osaka 530-8230 (JP)
(72) Inventor: IKEDA, K. Tsuruga Institute of Biotechnology of, Tsuruga-shi, Fukui 914-0047 (JP); NISHIYA, Y. Tsuruga Institute of Biotecnology of, Tsuruga-shi, Fukui 914-0047 (JP)
(74) Representative: Müller-Boré & Partner Patentanwälte
(86) International application number: PCT/JP2002/011933
(87) International publication number: WO 2003/042705

(57) **Abstract**

A device for dispensing liquid comprising a drive system having a motor-driven pipet member capable of liquid sucking and discharging that can be moved along orthogonal coordinates defined by three axes, i.e., lateral, horizontal and vertical axes, characterized by comprising another drive system that allows the work area of the motor-driven pipet member or the tip portion to move outside of the area that can be moved to using the orthogonal coordinates.

## Description

### TECHNICAL FIELD

The present invention relates to a dispensing device which combines a mechanism for expanding the work area of a motor-driven pipet, and a mechanism for selecting the size of a piston pump contained in a motor-driven pipet.

### BACKGROUND ART

In automatic purifiers and autoanalyzers for use in research or medical purpose, dispensing devices using motor-driven pipets for sucking a desired amount of liquid sample, reagent, etc., into a container set at a predetermined location and discharging the liquid into another container placed in another predetermined location are necessary.

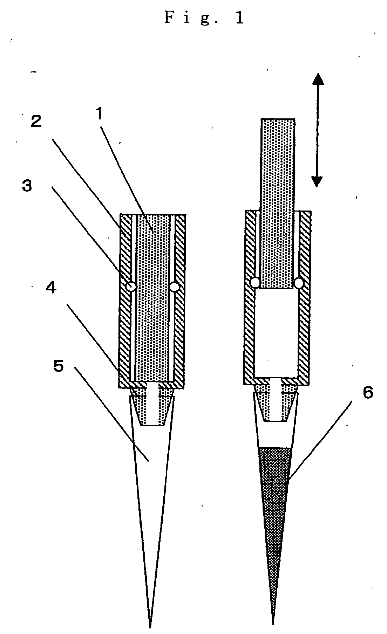

The motor-driven pipet has the basic structure shown in Fig. 1. It is possible to suck a sample or reagent directly into the cylinder 2 of the motor-driven pipet; however, if cross-contamination is a problem when different kinds of samples or reagents are dispensed, a nozzle 4 is commonly provided on the end of the piston pump and a disposable tip 5 is attached to the nozzle 4 for sucking liquids of samples or reagents 6 into the tip 5.

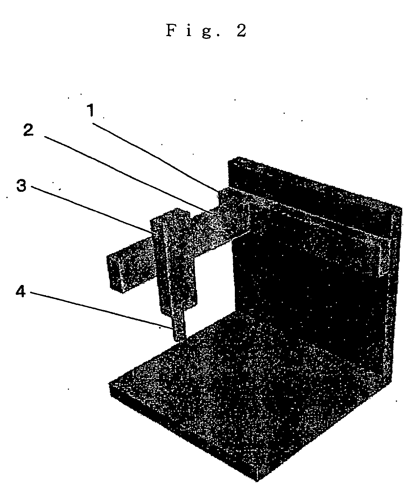

The motor-driven pipet is attached to a drive mechanism which can move along orthogonal coordinates as shown in Fig. 2. In the dispensing device, it is possible to preprogram the suction position of the liquid, amount of suction, discharge position, and amount of discharge. This makes it possible to automate liquid distribution operations.

Dispensing devices are widely used in fields which deal with liquids, such as the fields of medical care, pharmaceuticals, and biotechnology, as devices for automatically distributing an accurate amount of liquid to an exact position (container) without humans assistance. Dispensing devices require high speed and high accuracy in distributing liquids.

The distribution speed depends on the operating speed of the drive system that moves the motor-driven pipet, and the number of motor-driven pipets. The operating speed of the drive system is determined by the performance, speed reducing ratio, etc., of the motor of the drive section. Dispensing devices using a plurality of motor-driven pipet members are generally called a multi-channel type, and types with 4, 8, 12, or 96 channels are commercially available.

In addition to the accuracy of the piston pump drive section in the motor-driven pipet, the accuracy of the dispensing operation depends on the outer diameter of the piston and the space (dead volume) in the tip attached to the nozzle. In other words, it is impossible to accurately dispense a small amount of liquid using a piston pump having a large outer diameter or a tip having a large capacity. This is because dispensing by means of a piston pump utilizes changes in the air volume inside the piston pump.

The liquid amounts used for ordinary dispensing are often categorized into three levels: from about 0.5 µl to about 10 µl, from about 5 µl to about 200 µl, and from about 100 µl to about 1000 µl. To dispense accurate amounts of liquid, tips of different sizes are used for the different levels. Because the tips are different, the nozzles mounted on the motor-driven pipet member and piston pumps are also different. In other words, the shapes of the motor-driven pipets are different. To accurately dispense a liquid in amounts ranging from 0.5 µl to 1000 µl, a plurality of motor-driven pipets become necessary. Therefore, dispensing devices wherein dispensing members (which correspond to the motor-driven pipets of the present invention) having different shapes are automatically exchanged as disclosed in Japanese Unexamined Patent Publication No. 1996-229414 are also commercially available.

In conventional dispensing devices, performance improvements such as multi-channel designs for increasing speed, a mechanism to automatically exchange motor-driven pipet members for attaining accuracy, etc., have been sought. In other words, independent functions for dispensing devices have been pursued.

In recent years, laboratory automation (lab automation) has attracted attention in the research and medical fields. By automating liquid dispensing as well as purification, reaction and analysis, it is possible to decrease human error, conduct high-speed, large-volume processing, and reduce labor. The lab automation systems currently available are large in scale wherein dispensing devices and industrial conveyance robots, such as those used in automobile manufacturing, are combined. Conveyance robots are used to transfer containers containing pre/post-dispensing samples or reagents among a dispensing device, a reaction device and an analyzer. By organizing the processes of dispensing, reacting and analyzing into individual blocks, and transferring containers containing liquid, etc., these processes can be conducted in a continuous manner.

A huge expense is necessary to introduce such lab automation, making it difficult to introduce it into small- to middle-scale laboratories. Although a type wherein a dispensing device is relatively enlarged and the process from the dispensing step to the reaction step is automated is also available, it is still expensive. These conventional dispensing devices use a drive system such as that shown in Fig. 2 that can move along orthogonal coordinates. The work area defined by the lateral and horizontal axes depends on the orthogonal coordinates along which the drive system travels, and the motor-driven pipet cannot move out of this area. Therefore, a motor-driven pipet in a first dispensing device can suck only a sample or a reagent placed within this area and discharge the sample or reagent only into a container placed in this area. If a step that does not fall within this area is to be performed using a second dispensing device, the container containing a sample or reagent must be transferred to the second dispensing device using a conveyance robot.

In such a method, extra expense and installation space become necessary for the conveyance robot, and since the entire container is transferred, containers holding necessary samples or reagents cannot be accessed again until they are transferred to the first dispensing device from the second dispensing device by a conveyance robot. This problem arises when the same sample has to go through two processes simultaneously.

Thus, to send the same sample through two steps simultaneously using a conventional dispensing device, it is necessary to dispense the sample into two different containers. Dispensing the same sample or reagent into two different containers constitutes a waste of space and resources. In some cases, a plurality of conveyance robots may be needed. Because conveyance robots are generally more expensive than dispensing devices, this is not efficient.

### BRIEF DESCRIPTION OF THE DRAWINGS

Fig. 1 shows a schematic drawing of a piston pump.

Reference numbers 1 to 6 in Fig. 1 indicate:
- 1:: plunger
- 2:: cylinder
- 3:: O-ring
- 4:: nozzle
- 5:: tip
- 6:: liquid

Fig. 2 shows a schematic drawing of a conventional dispensing device.

Reference numbers 1 to 4 in Fig. 2 indicate:
- 1:: horizontal axis
- 2:: lateral axis
- 3:: vertical axis
- 4:: motor-driven pipet

Fig. 3 shows a schematic drawing of a basic mechanism of the present invention. Reference numbers 1 to 5 in Fig. 3 indicate:
- 1:: horizontal axis
- 2:: lateral axis
- 3:: vertical axis
- 4:: motor-driven pipet
- 5:: rotary axis

Fig. 4 shows an example of an application of the basic mechanism of the present invention.

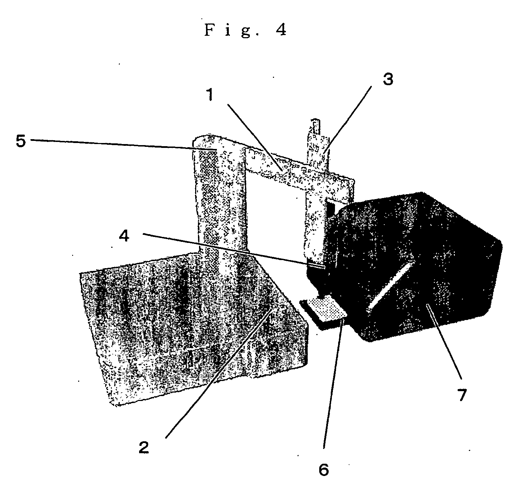

Reference numbers 1 to 7 in Fig. 4 indicate:
- 1:: horizontal axis
- 2:: layeral axis
- 3:: vertical axis
- 4:: motor-driven pipet
- 5:: rotary axis
- 6:: sample (microplate)
- 7:: analyzer (microplate reader).

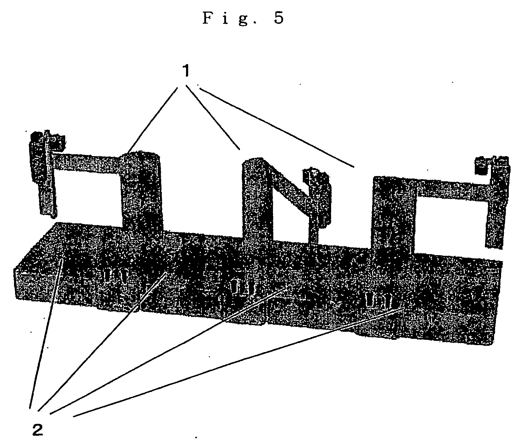

Fig. 5 shows an example of an application of the basic mechanism of the present invention.

Reference numbers 1 to 2 in Fig. 5 indicate:
- 1:: basic mechanism of the present invention
- 2:: operating stage

### DISCLOSURE OF THE INVENTION

The present invention relates to a dispensing device that can help automate small- to medium-scale laboratories while overcoming the above-mentioned problems and improve functions and performance in accordance with the automation scale and available budget.

The above-mentioned problems are attributable to the fact that the drive system to which the motor-driven pipet is attached is formed by three axes, i.e., lateral (forward/backward), horizontal (right/left) and vertical (up/down), and therefore the work area of the motor-driven pipet is restricted by the movement (effective strokes) of the three axes. The present invention has succeeded in expanding the work area of the motor-driven pipet by combining an operating mechanism that can move along orthogonal coordinates and an operating mechanism that can move along cylindrical coordinates.

The mechanism that can move along the orthogonal coordinates uses a mechanism that changes the rotational motion of a motor into linear motion, which is also used in conventional dispensing devices. The mechanism that can move along the cylindrical coordinates slows down and otherwise controls the motor's rotational motion and transfers it as rotational motion. The present invention comprises a basic drive system wherein a motor-driven pipet member is attached to a linear drive mechanism that can move in one, two or three directions: lateral, horizontal and vertical. The basic drive system is attached to a rotatable drive mechanism, and the rotatable drive mechanism is attached to a drive mechanism that can move in directions in which the basic drive system cannot.

Several actual combinations can be considered including:
(a) a motor-driven pipet member is mounted to a vertical axis, the vertical axis is attached to a horizontal axis, the horizontal axis is attached to a rotary axis, and the rotary axis is attached to a lateral axis;
(b) a motor-driven pipet member is mounted to a vertical axis, the vertical axis is attached to a lateral axis, the lateral axis is attached to a rotary axis, and the rotary axis is attached to a horizontal axis.
(c) a motor-driven pipet member is mounted to a horizontal axis, the horizontal axis is attached to a vertical axis, the vertical axis is attached to a rotary axis, and the rotary axis is attached to a lateral axis.

All of them can be attained by combining an operating mechanism that is movable along orthogonal coordinates and an operating mechanism that is movable along cylindrical coordinates. The work area of the motor-driven nozzle can be expanded by employing such a method.

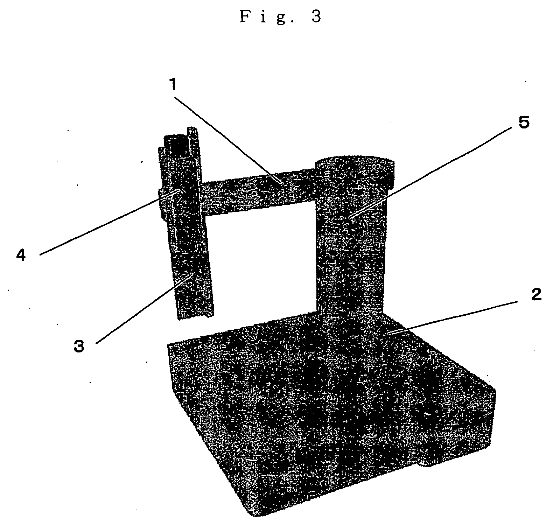

A concrete example of the basic mechanism of this invention is shown in Fig. 3. In Fig. 3, a motor-driven pipet member 4 is attached to a vertical axis 3, the vertical axis 3 is attached to a horizontal axis 1, the horizontal axis 1 is attached to a rotary axis 5, and the rotary axis 5 is attached to a lateral axis 2; however, this combination is only one example of the present invention.

By using the mechanism as shown in Fig. 3, the functions can be expanded as shown in Fig. 4. When a sample, etc., has to be transferred to an analyzer, such as a microplate reader 7, as shown in Fig. 4, with a conventional dispensing device, a separate conveying system and dispensing device are required, or the dispensing device must be reconstructed so that the microplate reader 7 falls within the work area of the motor-driven pipet of the dispensing device. However, in the present invention, a sample can be readily transferred to the microplate reader 7 by simply rotating the rotary axis 5.

An example of the dispensing device according to claim 6 of the present invention is illustrated in Fig. 5.

As shown in Fig. 5, it is possible to automate the operation by connecting a plurality of operating stages 2 using only the basic mechanisms 2 of the present invention.

In the present invention, as a means to automatically exchange a motor-driven pipet member that is capable of sucking and discharging liquid or a motor-driven tip member that sucks and discharges liquid in accordance with the amount to be dispensed, a mechanism wherein dispensing members (corresponding to motor-driven pipets in the present invention) having different shapes are automatically exchanged as disclosed in Japanese Unexamined Patent Publication No. 1996-229414 can be employed.

The present invention can provide a dispensing device that makes it possible to automate small- to medium-scale laboratories, and to improve function and performance according to the scale and budget of automation.

## Claims

1. A device for dispensing liquid comprising a drive system having a motor-driven pipet member that can suck and discharge liquid or a tip portion that sucks and discharges liquid movable along orthogonal coordinates defined by three axes, i.e., lateral, horizontal and vertical axes, the device further comprising an additional drive system that enables the work area of the motor-driven pipet member or the tip portion to extend outside the area movable along the orthogonal coordinates.

2. A device for dispensing liquid according to Claim 1, wherein the additional drive system is an operating mechanism movable along cylindrical coordinates.

3. A device for dispensing liquid according to Claim 1 or 2, wherein the motor-driven pipet member that can suck and discharge liquid or the tip portion that sucks and discharges liquid is automatically exchangeable in accordance with the amount of liquid to be dispensed.

4. A device for dispensing liquid according to any one of Claims 1 to 3, wherein a basic drive system that is attached to a linear drive mechanism that can move the motor-driven pipet member that can suck and discharge liquid or the tip portion that sucks and discharges liquid in one, two or three directions, the directions being lateral, horizontal and vertical is further attached to a rotatable drive mechanism, and the rotatable drive mechanism is attached to another drive mechanism that can move in directions in which the basic drive system cannot.

5. A device for dispensing liquid according to claim 4, wherein the motor-driven pipet member that can suck and discharge liquid or the tip portion that sucks and discharges liquid is automatically exchangeable according to the amount of liquid to be dispensed.

6. A device for dispensing liquid that can optionally expand a work area in which liquid is sucked and discharged by using a plurality of units each having a motor-driven pipet member for liquid sucking and discharging that is automatically exchangeable in accordance with the amount of liquid to be dispensed, wherein a basic drive system that is attached to a linear drive mechanism that can move the motor-driven pipet member for liquid sucking and discharging or a tip portion that sucks and discharges liquid in one, two or three directions, the directions being lateral, horizontal and vertical, is further attached to a rotatable drive mechanism, and the rotatable drive mechanism is attached to another drive mechanism that can move in directions where the basic drive system cannot.
